# EUROPÄISCHE PATENTSCHRIFT

(11) **EP 0 585 569 B1**
(45) Veröffentlichungstag und Bekanntmachung des Hinweises auf die Patenterteilung: **27.12.1995**
(21) Anmeldenummer: 93110925.0
(22) Anmeldetag: 08.07.1993
(51) Int. Cl.: B65H 67/06

(54) **Verfahren und Vorrichtung zum Positionieren von Spulen**
Procedure and device for positioning of bobbins
Procédé et dispositif pour positionner des bobines

(30) Priorität: 01.09.1992 DE 4229112
(43) Veröffentlichungstag der Anmeldung: 09.03.1994
(73) Patentinhaber: Rieter Ingolstadt Spinnereimaschinenbau AG, 85055 Ingolstadt (DE)
(72) Erfinder: Grabovszky, Gerhard, D-85101 Lenting (DE)

(56) Entgegenhaltungen:
- DE-A- 3 441 778
- DE-A- 3 511 816
- DE-A- 3 816 164

## Beschreibung

Die Erfindung betrifft ein Verfahren und eine Vorrichtung gemäß den Oberbegriffen der Ansprüche 1 und 6.

Aus der DE 34 41 778 A1, die die Oberbegriffe der Ansprüche 1 und 6 bildet, ist eine Textilmaschine mit einer Vorrichtung zum Überführen von Kreuzspulen in ein kastenförmiges Transportmittel bekannt. Die Vorrichtung ist an der Stirnseite der Textilmaschine angeordnet und übernimmt die von der Textilmaschine angelieferten Kreuzspulen. Auf der Vorrichtung ist ein Transportband angeordnet, das schrittweise antreibbar ist. Dadurch wird die Vorrichtung nach und nach mit Kreuzspulen befüllt. Sobald sich vier Kreuzspulen auf dem Förderband befinden, werden die Kreuzspulen an ihrem Umfang ergriffen, geschwenkt und in den kastenförmigen Transportbehälter abgelegt. Nachteilig bei einer derartigen Vorrichtung ist, daß das Förderband die äußeren Wicklungen der Kreuzspulen beim Positionieren beschädigen kann. Außerdem ist die Ablageeinrichtung während des Positioniervorganges mit Spulen besetzt, wodurch der Wirkungsgrad der Vorrichtung relativ niedrig ist. Insbesondere, wenn die Kreuzspulen von der Textilmaschine auf zwei Förderbändern angeliefert werden, ist die Abnahmevorrichtung nicht befriedigend schnell.

Aus der DE 38 16 164 A1 ist ein Spulenpalettierautomat bekannt, bei welchem einzelne Spulen von einem Förderband mit Positionierdornen mittels eines Greifers genommen und auf Paletten abgelegt werden. Die Spulen werden von der Textilmaschine auf zwei Förderbändern angeliefert und mittels eines Umsetzgerätes auf das Förderband mit den Dornen positioniert. Durch die Dornen wird eine zentrische Ausrichtung der Spulen ermöglicht. Nachteilig bei einer derartigen Vorrichtung ist, daß der Bauraum an der Stirnseite der Textilmaschine relativ groß ist, da die Spulen von zwei über die Stirnseite der Textilmaschine hinausragenden Förderbändern auf ein weiteres, aufwendiges, mit Dornen versehenes Förderband gesetzt werden müssen. Nachteilig ist weiterhin, daß der Greifer jeweils nur eine Spule auf der Palette ablegen kann. Dadurch ist eine Vielzahl von Bewegungen nötig, welche ein schnelles Abarbeiten der angelieferten Spulen schwierig macht.

Aufgabe der Erfindung ist es somit, ein Verfahren und eine Vorrichtung zu schaffen, welche wirkungsvoll und platzsparend die an einer Textilmaschine angelieferten Spulen positionieren, so daß die Spulen auf einer Palette abgelegt werden können.

Die Aufgabe wird erfindungsgemäß durch die Merkmale der Ansprüche 1 und 6 gelöst.

Gemäß dem gattungsgemäßen Verfahren, werden die Spulen auf der Textilmaschine zur Abholung durch einen Greifer der Palettiervorrichtung vorbereitet. Hierzu werden sie bei Bedarf, d.h. wenn die Orientierung der Spulen nicht wunschgemäß ist, gewendet und gekippt und durch den Taktförderer an vorbestimmten Stellen positioniert. Dadurch ist ein Greifer in der Lage die Spulen an diesen vorbestimmten Positionen abzuholen und einer Palette oder einem Container zuzuführen. Durch die Durchführung aller dieser Spulenbewegungen auf der Textilmaschine wird ein platzsparender Aufbau der Textilmaschine ermöglicht. Die Maschine benötigt durch den Anbau der Positioniervorrichtung keinen zusätzlichen Bauraum. Sowohl eine Nachrüstung als auch die Erstausstattung der Textilmaschine ist problemlos möglich.

Besonders vorteilhaft ist es, wenn von dem Taktförderer ein Spulenpaket mit einer Anzahl von positionierten Spulen gebildet wird, und wenn diese Anzahl der auf einer Palette in einer Reihe abgelegten Anzahl von Spulen entspricht. Dadurch wird es ermöglicht, daß mehrere Spulen positioniert werden und durch einen einzigen Palettierungsvorgang auf der Palette bzw. in einem Container abgelegt werden können. Damit ist ein sehr rationelles Palettieren ermöglicht. Die Wartezeiten der Spulen auf der Textilmaschine zur Abholung werden dadurch sehr gering.

Vorteilhaft ist es, wenn der Taktförderer und der Greifer der Palettiervorrichtung in der Lage sind das selbe Ablagemuster vorzubereiten. Dadurch wird gewährleistet, daß die vorbereiteten Spulen mit der Anordnung der Greifer an der Hebeeinheit der Palettiereinrichtung übereinstimmen und damit die Palettiervorrichtung effektiv arbeiten kann.

Durch die Anordnung einer Kipp- und/oder einer Wendeinrichtung und eines Taktförderers auf der Textilmaschine wird in vorteilhafter Weise ein platzsparender Aufbau gewährleistet. Vorteilhafterweise wird der Taktförderer auf einem Endgestell der Textilmaschine angeordnet. Dadurch ist eine einfache Bauweise des Taktförderers möglich, da kein eigenens Gestell erforderlich ist. Um eine Nachrüstung der Vorrichtungen auf der Textilmaschine auf einfache Weise zu ermöglichen, ist es vorteilhaft, wenn die Kippeinrichtung und der Taktförderer eine Länge aufweisen, welche im wesentlichen dem Endgestell der Textilmaschine entspricht. Der Aufbau der Textilmaschine ist dadurch nicht wesentlich zu verändern.

Vorteilhafterweise stimmt die Anzahl und Anordnung der Greifer einer Hebeeinheit der Palettiervorrichtung mit der Anzahl und Anordnung der positionierten Spulen auf dem Taktförderer überein. Dadurch ist eine wirkungsvolle und schnelle Abnahme der positionierten Spulen von der Textilmaschine möglich. Ist die Hebeeinheit austauschbar an der Palettiervorrichtung angeordnet, so ist eine Anpassung an verschiedene Ablagemuster an den Paletten möglich. Vorteilhafterweise ist auch der Taktförderer hinsichtlich der Anordnung und Anzahl der zu positionierenden Spulen austauschbar auf der Textilmaschine angeordnet.

Wenn die Greifer an der Hebeeinheit die Spulen an der Innenfläche ihrer Hülsen greifen, wird eine schonende Behandlung der Wicklung der Spule erreicht, da diese bei der Handhabung der Spule nicht berührt werden.

Als Taktförderer wird vorteilhafter Weise ein Klinkenförderer mit Klinken verwendet, welche an den überstehenden Hülsen der Spulen angreifen, so daß die Klinken die Spulen in Förderrichtung in eine vorbestimmte Position schieben. Beim Rückhub weichen die Klinken den Hülsenenden aus. Damit wird in vorteilhafter Weise sichergestellt, daß zum einen die Position der Spulen, insbesondere bei kleinen und leichten Spulen nicht verändert wird. Andererseits ist auch gewährleistet, daß die Fadenwicklungen der Spulen durch die zurückziehenden Klinken nicht berührt und damit beschädigt werden können. Die Klinken weichen vorteilhafterweise durch einen Niederhalter aus, welcher auf die Klinken beim Rückhub drückt. Die Klinken sind vorteilhafterweise zur Positionierung mehrerer Spulen in einer Klinkenleiste an einem Klinkenhalter angeordnet. Diese ist pneumatisch betätigbar. Entspricht die Anzahl der Klinken in der Klinkenleiste der Anzahl der Spulen einer Reihe auf der zu beladenden Palette, so wird durch einen entsprechenden Greifer ein schnelles Entladen der Textilmaschine ermöglicht. Bei einer Änderung des Ablagemusters auf der Palette ist es vorteilhaft, wenn die Klinkenleiste und die Hebeeinheit auswechselbar sind. Dabei kann mit geringem Montageaufwand auf ein verändertes Ablagemuster eine neue Anzahl und Anordnung der zu positionierenden Spulen eingestellt werden.

Zur schonenden Behandlung der Wicklung auf der Spule, wird diese auf einer Rollenbahn abgestützt. Dadurch wird die Reibung auf der Außenseite der Spule gering gehalten, so daß eine schonende Behandlung der Spule gewährleistet ist.

Sind die Rollenleisten der Rollenbahn in unterschiedlichen Höhen angeordnet, so wird eine Zentrierung der Spule über ihren Umfang gewährleistet. Vorteilhafterweise erfolgt diese Zentrierung unabhängig vom Spulendurchmesser.

Zur Erkennung, ob die Klinkenleiste mit der zur Hebeeinheit passenden Anzahl und Anordnung der Positionen übereinstimmt, ist an der Klinkenleiste eine Markierung angeordnet, welche automatisch lesbar ist. Diese Erkennung kann elektronisch, optisch oder mechanisch erfolgen. Vorteilhafterweise wird bei Nichtübereinstimmung der Hebeeinheit und der Klinkenleiste ein Signal an den Bediener der Einrichtung gegeben. Damit wird eine Fehlbedienung der Vorrichtung vermieden.

Die Erfindung wird im folgenden anhand von Ausführungsbeispielen dargestellt. Es zeigt
Figur 1 eine Palettiervorrichtung,
Figur 2 eine Positioniervorrichtung für Spulen,
Figur 3, 4 und 5 einen Ausschintt aus einem Taktförderer, und
Figur 6 und 7 einen Taktförderer im Querschnitt.

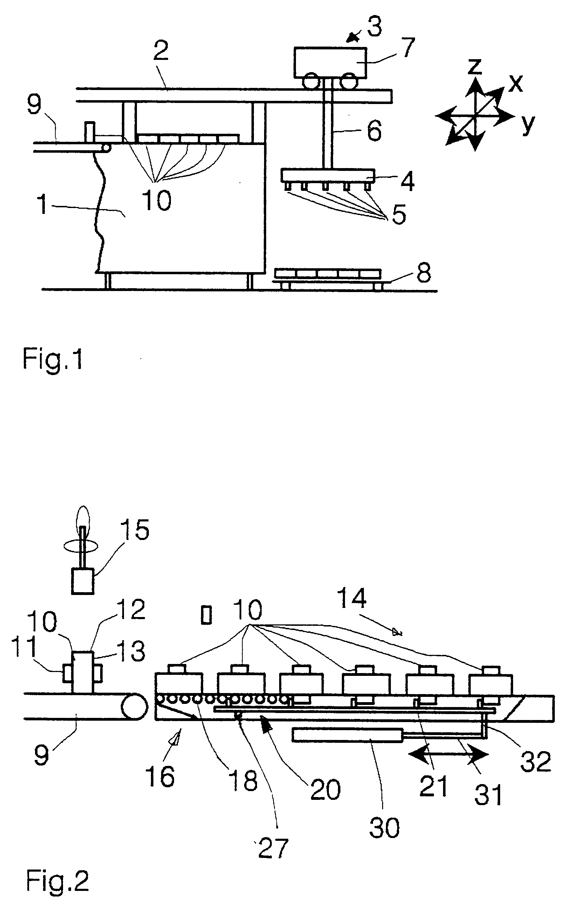

Figur 1 zeigt eine Palettiervorrichtung 3, welche an einer Stirnseite einer Textilmaschine 1 angeordnet ist. Die Palettiervorrichtung 3 ist auf einer an der Textilmaschine 1 angeordneten Fahrschiene 2 verschiebbar gelagert. Die Palettiervorrichtung 3 besteht in diesem Ausführungsbeispiel aus einer Verschiebeeinheit 7 und einer Hebeeinheit 4. An der Hebeeinheit 4 sind Greifer 5 angeordnet, welche Spulen 10 auf der Textilmaschine 1 aufnehmen und auf der Palette 8 abgeben können. Verschiebeeinheit 7 und Hebeeinheit 4 sind über ein Band 6 miteinander verbunden. Das Band 6 ist in seiner Länge veränderbar, wodurch die Hebeeinheit 4 einerseits bis unter die Verschiebeeinheit 7 und andererseits bis auf Höhe einer Palette 8 heb- und senkbar ist. Entsprechend der dargestellten Doppelpfeile in Figur 1 wird die Bewegung der Spulen in Z-Richtung durch die Hebeeinheit 4 durchgeführt. Die Bewegungsrichtungen X und Y werden durch die Verschiebeeinheit 7 bewerkstelligt. Die Verschiebeeinheit 7 fährt in Y-Richtung nach der Spulenaufnahme an der Textilmaschine 1 zur Palette 8 und verschiebt damit die Hebeeinheit 4 in X-Richtung so lange, bis sie über einem freien Platz auf der Palette 8 zu stehen kommt. Sodann wird die Hebeeinheit 4 auf die Palette 8 abgesenkt und die Spulen 10 von den Greifern 5 gelöst.

Vorteilhafterweise greifen die Greifer 5 jeweils in eine Hülse 11 der Spule 10 ein. Dadurch wird bewirkt, daß die äußeren Garnlagen der Spulen 10 nicht berührt und somit auch nicht beschädigt werden. Die Greifer 5 können beispielsweise pneumatisch betätigbar sein, indem aus einem konischen Körper Reibflächen abgespreizt werden, welche sich an der Innenseite der Hülse 11 abstützen und somit die Hülse 11 mit der Spule 10 sicher greifen.

Besonders vorteilhaft ist die Palettiervorrichtung 3, wenn die Spulen 10 auf der Textilmaschine 1 auf zwei parallelen Transportbändern 9 angeliefert werden. Dadurch ist es möglich, daß die Spulen 10 nach und nach auf dem Endgestell der Textilmaschine 1 im Anschluß an die beiden Transportbänder 9 positioniert werden. Sobald eine Reihe von Spulen 10 im Anschluß an eines der Transportbänder 9 fertiggestellt ist, fährt die Verschiebeeinheit 7 die positionierten Spulen 10 an, greift sie und legt sie auf der Palette 8 ab. In der Zwischenzeit kann im Anschluß an das zweite Transportband 9 eine weitere Spulenreihe positioniert werden.

Bei der Palettiervorrichtung 3 ist es besonders vorteilhaft, daß ein minimaler Platzbedarf an der Stirnseite der Textilmaschine 1 benötigt wird. Vor der Textilmaschine 1 ist lediglich Raum für eine Palette vorzusehen. Dies ermöglicht eine optimale Ausnutzung des in der Textilmaschinenhalle zur Verfügung stehenden Platzes. Durch die geringe Ausladung der Palettiervorrichtung 3 an der Stirnseite der Textilmaschine ist es möglich die Fahrschiene 2 ohne Abstützung am Hallenboden bis über die Palette 8 zu führen. Dadurch ist ein freier Zugang zur Textilmaschine 1 gewährleistet.

In Figur 2 ist ein im Anschluß an das Transportband 9 angeordneter Taktförderer 14 dargestellt. Im Endbereich des Transportbandes 9 befindet sich eine Spule 10. Die Spule 10 steht auf ihrer Umfangsfläche 12 auf dem Transportband 9. Die Hülse 11 ragt über die Stirnflächen 13 der Spule 10 hinaus. Über der Spule 10 ist eine Wende- und/oder Kippeinrichtung 15 skizziert. Diese Einrichtung 15 greift die Spule 10 und wendet sie um 180 °. Dies ist erforderlich, wenn es sich um konische Spulen handelt, um die Konizität aller Spulen in eine Richtung zeigen zu lassen, oder wenn beabsichtigt ist, daß die Fadenendenfixierung aller Spulen 10 auf einer Seite ist. Nach dem Wenden der Spule 10 wird sie um 90 ° gekippt, so daß die Spulenachse nicht mehr wie in dem angelieferten Zustand horizontal, sondern nunmehr vertikal ausgerichtet ist. Zum Kippen der Spule 10 kommen auch andere als diese dargestellte Kippvorrichtung in Frage. So kann zwischen Förderband 9 und dem Taktförderer 14 eine Kippvorrichtung angeordnet sein, welche die Spule 10 durch Schwerkraft oder Bewegen gegen einen Widerstand zum Kippen bringt.

Die Spule 10 kommt nach dem Wende- und Kippvorgang mit vertikaler Achse auf den Taktförderer 14 zu liegen. Eine der Stirnflächen 13 liegt dabei auf einer Rollenbahn 16. Auf dieser Rollenbahn 16 kann die Spule 10 bis an das Ende der Textilmaschine 1 gefördert werden. Die Förderung erfolgt mittels des Taktförderers 14. Der Taktförderer 14 bewegt einerseits die Spule 10 an das Ende der Textilmaschine 1 und positioniert andererseits, wenn die Endposition bereits von einer Spule 10 besetzt ist, die nachfolgenden Spulen 10 im Anschluß daran an vorbestimmten Stellen. Je nach Ablagemuster auf der Palette 8 und dem Durchmesser der Spulen 10 werden mehr oder weniger Spulen durch den Taktförderer 14 positioniert. Als vorteilhaft haben sich 4, 5 oder 6 Spulen in einer Reihe erwiesen.

Der Taktförderer 14 des gezeigten Ausführungsbeispieles ist derart ausgelegt, daß eine Spule mehr, als in der Palettiervorrichtung aufzunehmen ist, abgelegt werden kann. Dies hat den Vorteil, daß bereits während des Palettiervorganges der vorderen, bereits richtig positionierten Spulen 10, bereits eine weitere Spule 10 zur Positionierung vorbereitet ist und dementsprechend schnell ein neues Spulenpaket nach der Abnahme des ersten Spulenpaketes bereitgestellt werden kann. Weiterhin besteht dadurch der Vorteil, daß ausreichend Raum für die Kippbewegung der stehenden Spule 10 am Ende des Förderbandes 9 vorhanden ist, ohne daß bereits positionierte Spulen 10 in ihrer Lage verändert werden.

Sobald eine Spule 10 gekippt und auf der Rollenbahn 16 abgelegt ist, erhält der Taktförderer 14 ein Signal. Sofern in den vorderen Positionen noch eine Spule 10 aufgenommen werden kann, wird ein Pneumatikzylinder 30 aktiviert. Durch den Pneumatikzylinder 30 wird eine Zylinderstange 31 einmal angezogen und wieder ausgeschoben. Am Ende der Zylinderstange 31 ist über ein Verbindungselement 32 eine Klinkenleiste 20 angeordnet. An der Klinkenleiste 20 sind so viele Klinken 21 angeordnet, wie Spulen durch die Hebeeinheit 4 aufgenommen werden können. Durch die Hubbewegung des Pneumatikzylinders 30 wird die Klinkenleiste 20 soweit zurückgezogen, daß die Klinken 21 die an letzter Position stehende Spule 10 an ihrer überstehenden Hülse 11 greifen und in die vorletzte Position schieben kann. Befinden sich in den übrigen Positionen bereits Spulen 10, so klappen die Klinken 21 beim Hinhub weg, so daß die bereits positionierten Spulen 10 nicht verschoben werden. Beim Rückhub greifen die Klinken 21 in die überstehenden Hülsen 11 ein und bewegen die Spulen 10 um eine Position weiter.

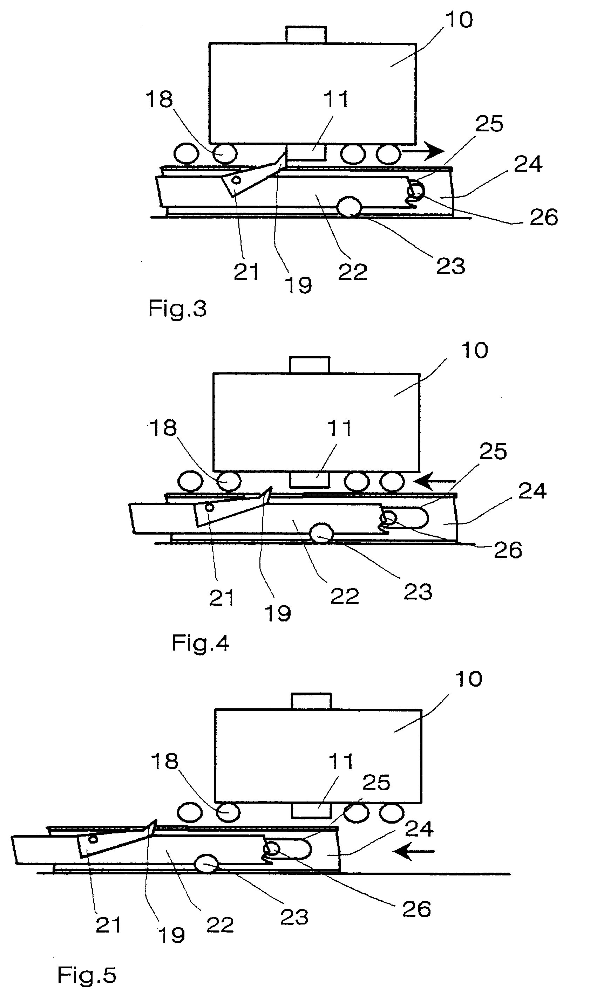

In den Figuren 3 bis 5 ist die Arbeitsweise der Klinkenleiste 20 detailliert dargestellt. Die Spule 10 liegt auf einer Rollenleiste 18 auf. An der überstehenden Hülse 11 greift die Klinke 21 bei einer Bewegung des Taktförderers 14 in Pfeilrichtung an. Spule 10 wird dabei ebenfalls in Pfeilrichtung bewegt. Die Klinke 21 ist auf einem Klinkenhalter 22 angebracht. Der Klinkenhalter 22 ist über eine Rolle 23 beweglich auf dem Untergrund gelagert. In dieser Stellung bleibt der Taktförderer 14 so lange stehen, bis er ein neues Signal zum Positionieren einer weiteren Spule 10 erhält. Sobald das Signal gegeben wurde, bewegt der Pneumatikzylinder 30 zuerst den Klinkenhalter 22 in Pfeilrichtung der Figur 4. Dabei wird die Klinke 21 an der Kante einer Aussparung im Niederhalter 24 niedergedrückt. Damit wird in vorteilhafter Weise erreicht, daß die Spitze der Klinke 21 nicht an den Garnlagen der Stirnfläche 13 der Spule 10 entlanggleitet und die Spule 10 beschädigt. Außerdem wird dabei gewährleistet, daß beim Bewegen der Klinke 21 unter einer Spule 10 diese in ihrer Position nicht verändert wird.

Der Klinkenhalter 22 wird so lange in Pfeilrichtung relativ zu dem Niederhalter 24 bewegt, bis ein Stift 26 am Ende eines im Niederhalter 24 angeordneten Langloches 25 anschlägt und diesen ebenfalls in Pfeilrichtung mitbewegt. Dies ist in Figur 5 dargestellt. In dieser Stellung werden Klinkenhalter 22 und Niederhalter 24 mit ihrer Klinke 21 bis hinter die letzte Spule 10 auf dem Taktförderer 14 bewegt. Der Pneumatikzylinder 30 befindet sich sodann in einer seiner Endlagen. Beim Rückhub des Pneumatikzylinders 30 wird zuerst wieder der Klinkenhalter 22 so lange bewegt, bis der Stift 26 das andere Ende des Langloches 25 erreicht hat. Nach dieser Stellung wird wiederum sowohl Klinkenhalter 22 als auch Niederhalter 24 bewegt. Die Klinke 21 ist dabei aus der Aussparung im Niederhalter 24 aufgetaucht und übt gegenüber einer Spule 10 einen Widerstand aus, so daß diese Spule 10 um eine Position weitergeschoben wird. Zu beachten ist hierbei, daß die Reibung zwischen Klinkenhalter 22 und Niederhalter 24 so unterschiedlich ist, daß der Pneumatikzylinder 30 über die Zylinderstange 31 und das Verbindungselement 32 zuerst den Klinkenhalter 22 bewegt und erst nach Anschlag des Stiftes 26 im Langloch 25 auch der Niederhalter 24 mitbewegt wird. Dies wird durch eine Lagerung, auf Rollen 23 und eine Gleitlagerung des Niederhalters 24 auf dem der Klinkenleiste 22 Untergrund gewährleistet.

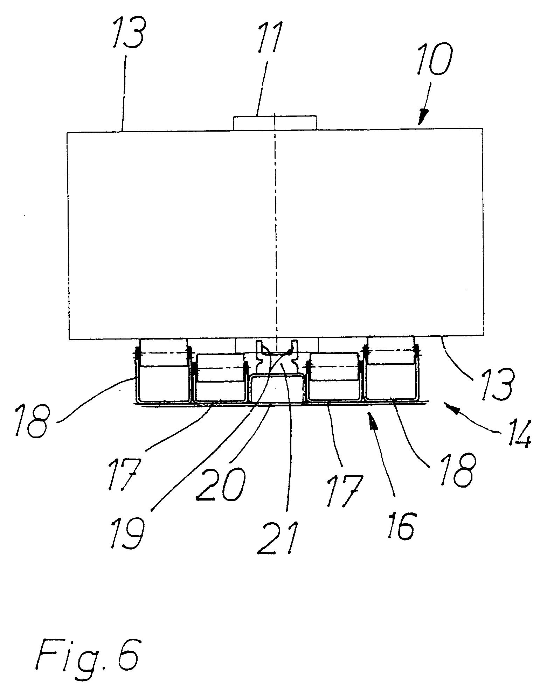

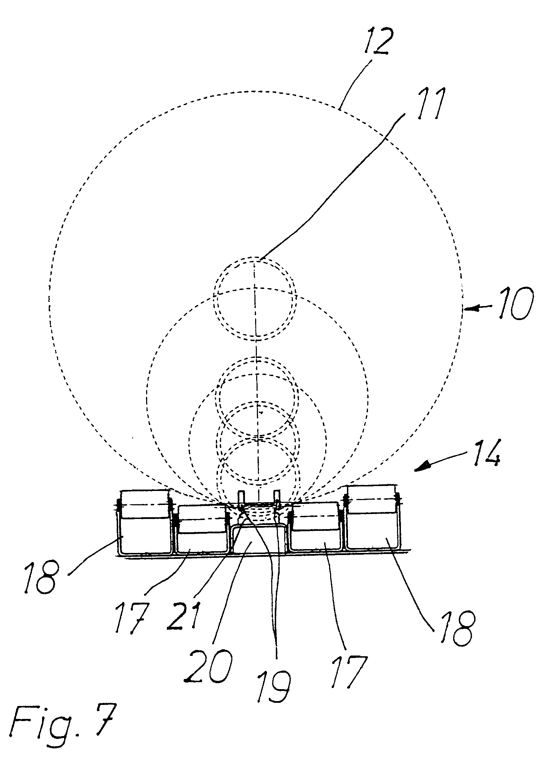

Figuren 6 und 7 zeigen einen Querschnitt durch einen Taktförderer 14. Figur 6 zeigt einen Taktförderer 14 mit liegender Spule 10. Spule 10 liegt dabei mit ihrer Stirnfläche 13 auf der Rollenbahn 16 auf. Die Rollenbahn 16 besteht aus einer inneren Rollenleiste 17 und einer äußeren Rollenleiste 18. Im Idealfall stützt sich dabei die Wicklung der Spule 10 auf der äußeren Rollenleiste 18 und die Hülse 11 auf der inneren Rollenleiste 17 ab. Die in der Klinkenleiste 20 angeordnete Klinke 21 greift an der überstehenden Hülse 11 der Spule 10 an. Durch zwei Mitnehmerstifte 19 an der Klinke 21 wird in vorteilhafter Weise erreicht, daß die Spule 10 stets gegenüber der Klinkenleiste 20 zentriert positioniert wird.

Figur 7 stellt einen Taktförderer 14 dar, bei dem Spulen 10 auf ihrem Spulenumfang 12 stehen. Vorteilhaft ist eine derartige Anordnung der Spulen 10 auf dem Taktförderer 14, wenn keine Positionierung der Spulen 10 benötigt wird. Dies ist der Fall z.B. bei einem Partiewechsel auf der Textilmaschine, bei dem sämtliche Spulen ausgetauscht werden müssen und es darauf ankommt, daß die Textilmaschine möglichst schnell entleert wird. Der Taktförderer 14 bewegt in diesem Fall die Spulen 10 auf ihrer Umfangsfläche 12 bis zum Ende der Maschine und bewirkt, daß die Spulen 10 in einen dort aufgestellten Behälter fallen. Bei einem Partiewechsel fallen Spulen 10 mit allen Durchmessern an. Der Taktförderer 14 ist durch die Anordnung der Rollenleisten 17 und 18 sowie der Klinkenleiste 20 in der Lage alle Durchmesser zu fördern.

Zu einer sicheren Förderung der Spulen 10 ist in der Rollenbahn 16 die innere Rollenleiste 17 tiefer als die äußere Rollenleiste 18 angeordnet. Außerdem ist die Klinkenleiste 20 tiefer als die innere Rollenleiste 17 angeordnet. Damit wird eine Mulde geschaffen, in welcher sich die Spulen 10, unabhängig von ihrem Durchmesser zentrieren und in dieser Lage gut von der Klinke 21 mitgenommen werden können. Ein seitliches Abrollen der Spulen 10 wird hiermit sicher vermieden.

Die Anordnung der Rollenleisten 17 und 18 hat weiterhin den Vorteil, daß die Spulen 10 beim Übergang vom Transportband 9 auf den Taktförderer 14 zentriert werden. Bei einer Anordnung einer Kippeinrichtung im Bereich des Taktförderers wird somit ein zuverlässiges Kippen der Spule 10 und ein sicheres Ausrichten der Spule 10 hinsichtlich ihrer seitlichen Anordnung gewährleistet.

Ein Vorteil der Palettiervorrichtung ist der einfache und platzsparende Aufbau. An der Stirnseite der Textilmaschine 1 ist lediglich Platz für eine Palette 8 zu schaffen. Der freie Durchgang an der Stirnseite der Textilmaschine 1 wird nicht wesentlich gestört.

Durch die Anordnung des Taktförderers 14 auf dem Endgestell der Textilmaschine 1 wird in vorteilhafter Weise gewährleistet, daß die Spulen 10, ohne daß zusätzlicher Bauraum benötigt wird, für eine geordnete Abnahme bereitgestellt werden können. Die Abnahme kann sowohl mit der Palettiervorrichtung 3 als auch mit beispielsweise einer Hängebahn erfolgen, welche über die Textilmaschine 1 fährt, die Spulen 10 dort aufnimmt, und sie sodann an eine Ablagestelle, abseits der Textilmaschine 1 fährt. In diesem Fall wird kein zusätzlicher Bauraum neben der Textilmaschine 1 benötigt, so daß eine Hallenausnutzung in vorteilhafter Weise gewährleistet ist.

Durch den Taktförderer 14 ist es in vorteilhafter Weise möglich Spulen 10 sowohl in horizontaler als auch vertikaler Ausrichtung zu transportieren. Sind die Spulen 10 horizontal mit ihrer Achse ausgerichtet, so ist ein Zentrieren in ihrer Längsrichtung gewährleistet. Die Spulen können außerdem auf diese Art und Weise schnell von der Textilmaschine 1 abgeräumt werden. Im Fall, daß die Achsen der Spulen 10 vertikal ausgerichtet sind, wird ein exaktes Positionieren der Spulen unabhängig von ihrem Durchmesser in Bezug auf die Hülsen 11 gewährleistet. Durch den Austausch der Klinkenleiste 20 sind auf einfache Weise eine verschieden große Anzahl und Lage von Positionierstellen einzurichten. In einer vorteilhaften Ausgestaltung wird die Klinkenleiste 20 auf das Verbindungselement 32 aufgesteckt. Dadurch ist ein schneller Austausch mit einer anderen Klinkenleiste 20 möglich. Zur Vermeidung von fehlerhaften Belegungen von Klinkenleiste 20 und Hebeeinheit 4 werden Sensoren angeordnet, welche feststellen, ob die Klinkenleiste 20 und die Anordnung der Greifer 5 auf der Hebeeinheit 4 zusammenpassen. Für den Fall einer Fehlbelegung erscheint ein Signal für das Bedienungspersonal.

Die Erfindung ist nicht auf das dargestellte Ausführungsbeispiel beschränkt. Die Ablage der Spulen kann sowohl auf einer Palette als auch in einem Container oder einem anderen Zwischenspeicher erfolgen.

## Patentansprüche

1. Verfahren zum Positionieren von konischen oder zylindrischen Kreuzspulen (10) an einer Textilmaschine (1) mit wenigstens einem, die Spulen (10) im wesentlichen mit horizontaler Achse aber mit unterschiedlicher Lage ihrer Konizität oder Fadenreserve an eine Seite der Textilmaschine (1) fördernden Förderband (9), mit einem daran anschließenden, die Spulen (10) übernehmenden Taktförderer (14) und mit einer Palettiervorrichtung (3), dadurch gekennzeichnet, daß die Spulen (10) auf der Textilmaschine (1) im Bereich zwischen Förderband (9) und Taktförderer (14) zur gleichen Ausrichtung ihrer Konizität bei Bedarf gewendet und/oder gekippt werden und daß dann durch den Taktförderer (14) mehrere Spulen (10) zur Abholung durch einen Greifer (5) der Palettiervorrichtung (3) bezüglich ihrer Hülsen (11) positioniert werden, indem der Taktförderer (14) in Förderrichtung die Spulen (10) an ihren Hülsen (11) ergreift und um eine Position weiterfördert, während er entgegen der Förderrichtung außer Eingriff gebracht wird.

2. Verfahren nach Anspruch 1, dadurch gekennzeichnet, daß die Spulen (10) auf dem Endgestell an der Stirnseite der Textilmaschine (1) positioniert, von dem Greifer (5) übernommen und unmittelbar vor der Textilmaschine (1) abgelegt werden.

3. Verfahren nach Anspruch 1 oder 2, dadurch gekennzeichnet, daß von dem Taktförderer (14) ein Spulenpaket mit einer Anzahl von positionierten Spulen (10) gebildet wird, die der Anzahl der auf einer Palette (8) in einer Reihe abgelegten Spulen (10) entspricht.

4. Verfahren nach einem der Ansprüche 1 bis 3, dadurch gekennzeichnet, daß bei einer Änderung des Ablagemusters auf der Palette (8) der Taktförderer (14) und die Greifer (5) der Palettiervorrichtung (3) hinsichtlich der Anzahl der positionierten, gegriffenen und abgelegten Spulen (10) aufeinander abgestimmt werden.

5. Verfahren nach einem der Ansprüche 1 bis 4, dadurch gekennzeichnet, daß zum schnellen Abräumen der Spulen (10) von der Textilmaschine (1) die Spulen (10) mit im wesentlichen horizontaler Achse dem Takftörderer (14) zugeführt werden, und daß der Taktförderer (14) die Spulen (10) an ihrer Stirnseite ergreift und eine Position weiterfördert, während er entgegen der Förderrichtung außer Eingriff gebracht wird.

6. Textilmaschine (1) mit wenigstens einem Kreuzspulen (10) an eine Seite der Textilmaschine (1) transportierenden Förderband (9), einem daran anschließenden Taktförderer (14) und mit einer an der Stirnseite der Textilmaschine (1) angeordneten Palettiervorrichtung (3) zur Durchführung des Verfahrens nach einem der Ansprüche 1 bis 5, dadurch gekennzeichnet, daß auf der Textilmaschine (1) zwischen dem Förderband (9) und der Palettiervorrichtung (3) eine Kipp- und/oder Wendeeinrichtung (15) und der Taktförderer (14) angeordnet sind, daß der Taktförderer (14) Einrichtungen (21) aufweist zum Ergreifen und Fördern der Spulen (10) wahlweise an ihren überstehenden Hülsen (11) oder ihren Stirnseiten und daß die Einrichtungen in Bezug auf die Hülsen (11) und Spulen (10) außer Eingriff bringbar sind.

7. Textilmaschine nach Anspruch 6, dadurch gekennzeichnet, daß der Taktförderer (14) auf einem Endgestell der Textilmaschine (1) angeordnet ist.

8. Textilmaschine nach Anspruch 7, dadurch gekennzeichnet, daß die Kippeinrichtung (15) und der Taktförderer (14) eine Länge aufweisen, welche im wesentlichen dem Endgestell der Textilmaschine (1) entspricht.

9. Textilmaschine nach einem der Ansprüche 6 bis 8, dadurch gekennzeichnet, daß die Palettiervorrichtung (3) eine Hebeeinheit (4) mit einer Anzahl Greifern (5) aufweist, welche der Anzahl der positionierten Spulen (10) auf dem Taktförderer (14) entspricht.

10. Textilmaschine nach Anspruch 9, dadurch gekennzeichnet, daß die Hebeeinheit (4) mit den Greifern (5) austauschbar an der Palettiervorrichtung (3) angeordnet ist.

11. Textilmaschine nach Anspruch 9 oder 10, dadurch gekennzeichnet, daß der Greifer (5) die Spule (10) an der Innenfläche ihrer Hülse (11) greift.

12. Textilmaschine nach einem der Ansprüche 6 bis 11, dadurch gekennzeichnet, daß der Taktförderer (14) auf der Textilmaschine (1) und die Hebeeinheit (4) an der Palettiervorrichtung (3) austauschbar angeordnet sind.

13. Textilmaschine nach einem der Ansprüche 6 bis 12, dadurch gekennzeichnet, daß der Taktförderer (14) ein Klinkenförderer mit Klinken (21) ist, welche an den überstehenden Hülsen (11) angreifen, so daß die Klinken (21) die Spulen (10) in Förderrichtung in eine vorbestimmte Position schieben, und daß beim Rückhub die Klinken (21) den Hülsenenden (11) ausweichen.

14. Textilmaschine nach Anspruch 13, dadurch gekennzeichnet, daß die Klinken (21) von einem Niederhalter (24) außer Eingriff bringbar sind.

15. Textilmaschine nach Anspruch 14, dadurch gekennzeichnet, daß mehrere Klinken (21) zur Positionierung mehrerer Spulen (10) in einer Klinkenleiste (20) angeordnet sind.

16. Textilmaschine nach Anspruch 15, dadurch gekennzeichnet, daß die Klinkenleiste (20) pneumatisch betätigbar ist.

17. Textilmaschine nach Anspruch 15 oder 16, dadurch gekennzeichnet, daß die Anzahl der in der Klinkenleiste (20) angeordneten Klinken (21) der Anzahl der Spulen (10) einer Reihe auf einer zu beladenden Palette (8) entspricht.

18. Textilmaschine nach einem der Ansprüche 12 bis 15, dadurch gekennzeichnet, daß die Klinkenleiste (20) auswechselbar ist.

19. Textilmaschine nach einem der Ansprüche 13 bis 18, dadurch gekennzeichnet, daß die Spule (10) über eine Rollenbahn (16) abgestützt ist.

20. Textilmaschine nach Anspruch 19, dadurch gekennzeichnet, daß die Rollenbahn (16) aus mehreren nebeneinander angeordneten Rollenleisten (17, 18) besteht, wobei die den Klinken (21) näheren Rollenleisten (17) niedriger angeordnet sind als die äußeren Rollenleisten (18).

21. Textilmaschine nach einem der Ansprüche 13 bis 20, dadurch gekennzeichnet, daß die Klinkenleiste (20) zur Erkennung der Anzahl und Anordnung der Positionen eine automatisch lesbare Markierung aufweist.

## Claims

1. A method of positioning conical or cylindrical cross-wound bobbins (10) on a textile machine (1) having at least one conveyor belt (9) conveying the bobbins (10) essentially with a horizontal axis but having a different position of their conicity or thread reserve to one side of the textile machine (1), with a clock-timed conveyor (14) attached to the said conveyor belt (9) and taking up the bobbins (10), and having a palletizing device (3), **characterized in that** the bobbins (10) on the textile machine (1) are where necessary turned and/or tilted in the region between the conveyor belt (9) and the clock-timed conveyor (14) to achieve the same orientation of their conicity, and a plurality of bobbins (10) for collection by a gripper (5) of the palletizing device (3) are positioned by the clock-timed conveyor (14) with respect to their sleeves (11), wherein the clock-timed conveyor (14) engages on the sleeves (11) of the bobbins (10) in the conveying direction thereof and advances them by one position, whilst it is brought out of engagement contrary to the conveying direction.

2. A method according to Claim 1, **characterized in that** the bobbins (10) are positioned on the end frame at the front end of the textile machine (1), are taken up by the gripper (5) and are deposited immediately in front of the textile machine (1).

3. A method according to Claim 1 or 2, **characterized in that** a bobbin packet with a number of positioned bobbins (10), corresponding to the number of bobbins (10) deposited in one row on a pallet (8), is formed by the clock-timed conveyor (14).

4. A method according to one of Claims 1 to 3, **characterized in that**, when the deposition pattern on the pallet (8) is changed, the clock-timed conveyor (14) and the grippers (5) of the palletizing device (3) are adjusted to one another with respect to the number of the bobbins (10) positioned, gripped and deposited.

5. A method according to one of Claims 1 to 4, **characterized in that**, in order to remove the bobbins (10) rapidly from the textile machine (1), the bobbins (10) are supplied with a substantially horizontal axis to the clock-timed conveyor (14), and the clock-timed conveyor (14) grips the bobbins (10) on the front end thereof and advances them [by] one position, whilst it is brought out of engagement contrary to the conveying direction.

6. A textile machine (1) with at least one conveyor belt (9) conveying cross-wound bobbins (10) to one side of the textile machine (1), with a clock-timed conveyor (14) attached to the said conveyor belt (9), and with a palletizing device (3) mounted on the front end of the textile machine (1), for performing the method according to one of Claims 1 to 5, **characterized in that** a tilting and/or turning device (15) and the clock-timed conveyor (14) are arranged on the textile machine (1) between the conveyor belt (9) and the palletizing device (3), the clock-timed conveyor (14) comprises devices (21) for gripping and conveying the bobbins (10) optionally on their projecting sleeves (11) or the front ends thereof, and the devices can be brought out of engagement with respect to the sleeves (11) and bobbins (10).

7. A textile machine according to Claim 6, **characterized in that** the clock-timed conveyor (14) is arranged on an end frame of the textile machine (1).

8. A textile machine according to Claim 7, **characterized in that** the tilting device (15) and the clock-timed conveyor (14) have a length substantially corresponding to the end frame of the textile machine (1).

9. A textile machine according to one of Claims 6 to 8, **characterized in that** the palletizing device (3) has a lifting unit (4) with a number of grippers corresponding to the number of positioned bobbins (10) on the clock-timed conveyor (14).

10. A textile machine according to Claim 9, **characterized in that** the lifting unit (4) with the grippers (5) is arranged in an interchangeable manner on the palletizing device (3).

11. A textile machine according to Claim 9 or 10, **characterized in that** the gripper (5) grips the bobbin (10) on the inner face of the sleeve (11) thereof.

12. A textile machine according to one of Claims 6 to 11, **characterized in that** the clock-timed conveyor (14) is arranged on the textile machine (1) and the lifting unit (4) on the palletizing device (3) in an interchangeable manner.

13. A textile machine according to one of Claims 6 to 12, **characterized in that** the clock-timed conveyor (14) is a ratchet conveyor with ratchets (21) engaging on the projecting sleeves (11), so that the ratchets (21) push the bobbins (10) into a pre-determined position in the conveying direction, and the ratchets (21) yield to the ends of the sleeves (11) during the reverse stroke.

14. A textile machine according to Claim 13, **characterized in that** the ratchets (21) can be brought out of engagement by a holding-down device (24).

15. A textile machine according to Claim 14, **characterized in that** a plurality of ratchets (21) for positioning a plurality of bobbins (10) are arranged in a ratchet strip (20).

16. A textile machine according to Claim 15, **characterized in that** the ratchet strip (20) is actuable pneumatically.

17. A textile machine according to Claim 15 or 16, **characterized in that** the number of ratchets (21) arranged in the ratchet strip (20) corresponds to the number of bobbins (10) in one row of a pallet (8) to be loaded.

18. A textile machine according to one of Claims 12 to 15, **characterized in that** the ratchet strip (20) is interchangeable.

19. A textile machine according to one of Claims 13 to 18, **characterized in that** the bobbin (10) is supported by way of a roller bed (16).

20. A textile machine according to Claim 19, **characterized in that** the roller bed (16) comprises a plurality of adjacently arranged roller strips (17, 18), the roller strips (17) closer to the ratchets (21) being situated at a lower level than the outer roller strips (18).

21. A textile machine according to one of Claims 13 to 20, **characterized in that** the ratchet strip (20) has an automatically readable marking for recognition of the number and arrangement of the positions.

## Revendications

1. Procédé pour le positionnement de bobines croisées (10), coniques ou cylindriques, sur une machine textile (1) comportant au moins une bande transporteuse (9) transportant les bobines (10) essentiellement avec leur axe en position horizontale mais dans une position variée en ce qui concerne leur conicité ou leur réserve de fil, à un côté de la machine textile (1), et un convoyeur (14) commandé par impulsion y rattaché et reprenant les bobines (10), qui est pourvu d'un dispositif de palettisation (3), caractérisé en ce que les bobines (10) sont retournées et/ou basculées sur la machine textile (1), si nécessaire, dans la zone située entre la bande transporteuse (9) et le convoyeur commandé par impulsion (14), afin que leur conicité soit orientée toujours dans le même sens et en ce que plusieurs bobines (10) sont positionnées ensuite par le convoyeur (14) commandé par impulsion, eu égard à leurs tubes (11), dans le but d'être reprises par un dispositif de préhension (5) du dispositif de palettisation (3), le convoyeur (14) commandé par impulsion saisissant les bobines (10) à leurs tubes (11), en direction de l'acheminement, pour les avancer d'une position tandis qu'il est mis hors action en sens contraire.

2. Procédé selon la revendication 1, caractérisé en ce que les bobines (10) sont positionnées sur la têtière de bout prévue sur le côté frontal de la machine textile (1), qu'elles sont reprises par le dispositif de préhension et déposées devant la machine textile (1), à proximité immédiate de celle-ci.

3. Procédé selon la revendication 1 ou 2, caractérisé en ce que le convoyeur (14) commandé par impulsion forme un paquet de bobines comprenant un nombre de bobines (10) positionnées correspondant au nombre de bobines (10) déposées dans une rangée sur une palette (8).

4. Procédé selon une des revendications 1 à 3, caractérisé en ce que lors du changement du modèle de dépôt sur la palette (8) il faut également régler en conséquence le convoyeur (14) et les éléments de saisie (5) du dispositif de préhension du dispositif de paletisation (3) afin de les adapter au nombre de bobines positionnées, saisies et déposées.

5. Procédé selon une des revendication 1 à 4, caractérisé en ce que dans le but d'un déblaiement rapide des bobines (10) de la machine textile (1), les bobines (10) sont acheminées vers le convoyeur (14) commandé par impulsion essentiellement avec leur axe en position horizontale, et que le convoyeur (14) saisit les bobines (10) à leur côté frontal et les avance d'une position tandis qu'il est mis hors action en sens contraire au sens d'acheminement.

6. Machine textile (1) comprenant au moins une bande transporteuse (9) transportant des bobines croisées (10) vers un côté de la machien textile (1), un covoyeur (14) commandé par impulsion qui y est rattaché et un dispositif de palettisation (3) disposé sur le côté frontal de la machine textile (1) pour la mise en oeuvre du procédé selon une des revendications 1 à 5, caractérisée en ce que sur la machine textile (1), entre la bande transporteuse (9) et le dispositif de palettisation (3), sont disposés une installation de basculement et/ou de renversement (15) ainsi que le convoyeur (14) commandé par impulsion; en ce que le convoyeur (14) commandé par impulsion comporte des installations (21) pour saisir et acheminer sélectivement des bobines (10) soit par leur tube (11) excédant soit par leur côté frontal et en ce que les installations peuvent être mises hors fonctionnement eu égard aux tubes (11) et aux bobines (10).

7. Machine textile selon la revendication 6, caractérisée en ce que le convoyeur (14) commandé par impulsion est disposé sur une têtière de bout de la machine textile (1).

8. Machine textile selon la revendication 7, caractérisée en ce que l'installation de basculement (15) et le convoyeur commandé par impulsion (14) présentent une longueur qui correspond sensiblement à la longueur de la têtière de bout de la machine textile (1).

9. Machine textile selon une des revendications 6 à 8, caractérisée en ce que le dispositif de palettisation (3) comporte une unité de levage (4) comprenant un nombre d'éléments de préhension (5) qui correspond au nombre de bobines (10) poositionnées sur le convoyeur (14) commandé par impulsion.

10. Machine textile selon la revendication 9, caractérisée en ce que l'unité de levage (4) avec les éléments de préhension (5) est montée sur le dispositif de palettisation (3) de façon à pouvoir être échangé.

11. Machine textile selon la revendication 9 ou 10, caractérisée en ce que l'élément de préhension (5) saisit la bobine (10) sur la paroi intérieure de son tube (11).

12. Machine textile selon une des revendications 6 à 11, caractérisée en ce que le convoyeur (14) commandé par impulsion est monté sur la machine textile (1) et que l'unité de levage (4) est monté sur le dispositif de palettisation (3) de façon à pouvoir être échangés.

13. Machine textile selon une des revendications 6 à 12, caractérisée en ce que le convoyeur (14) commandé par impulsion est un convoyeur à cliquets comportant des cliquets (21) agissant sur les tubes (11) excédant si bien que les cliquets (21) poussent les bobines (10) en direction d'acheminement dans une position prédéterminée et que les cliquets (21), lors de la course de retour, évitent les bouts des tubes (11).

14. Machine textile selon la revendication 13, caractérisée en ce que les cliquets (21) peuvent être mis hors action par l'intérmédiaire d'un dispositif d'abaissement (24).

15. Machine textile selon la revendication 14, caractérisée en ce que plusieurs cliquets (21) sont disposés sur une barre (20) de cliquets pour le positionnement de plusieurs bobines (10).

16. Machine textile selon la revendication 15, caractérisée en ce que la barre de cliquets (20) peut être commandée de façon pneumatique.

17. Machine textile selon la revendication 15 ou 16, caractérisée en ce que le nombre de cliquets (21) disposés sur la barre (20) de cliquets correspond au nombre de bobines (10) prévues pour une rangée sur la palette (8) à charger.

18. Machine textile selon une des revendications 12 à 15, caractérisée en ce que la barre (20) de cliquets peut être échangée.

19. Machine textile selon une des revendications 13 à 18, caractérisée en ce que la bobine (10) est supportée par un transrouleur (16).

20. Machine textile selon la revendication 19, caractérisée en ce que le transrouleur (16) est composé de plusieurs barres conductrices (17, 18) à rouleau, disposées de façon juxtaposée, les barres conductrices (17) à rouleau situées plus proches aux cliquets (21) étant disposées plus bas que les barres conductrices (18) extérieures.

21. Machine textile selon une des revendications 13 à 20, caractérisée en ce que la barre (20) de cliquets présente un marquage à lecture automatique pour la reconnaissance du nombre et la disposition des positions.
